# FASCICULE DE BREVET EUROPEEN

(11) **EP 0 951 349 B1**
(45) Date de publication et mention de la délivrance du brevet: **16.10.2002**
(21) Numéro de dépôt: 97937625.8
(22) Date de dépôt: 13.08.1997
(51) Int. Cl.: B01J 19/08, C02F 1/48, F02M 27/04

(54) **DISPOSITIF DE GENERATION DE CHAMPS MAGNETIQUES**
VORRICHTUNG ZUR ERZEUGUNG VON MAGNETFELDER
DEVICE FOR GENERATING MAGNETIC FIELDS

(30) Priorité: 13.08.1996 FR 9610288
(43) Date de publication de la demande: 27.10.1999
(73) Titulaire: Riera, Michel, 06740 Châteauneuf de Grasse (FR)
(72) Inventeur: Riera, Michel, 06740 Châteauneuf de Grasse (FR)
(74) Mandataire: Cabinet HERRBURGER
(86) Numéro de dépôt international: FR9701488
(87) Numéro de publication internationale: WO98006491

(56) Documents cités:
- EP-A- 0 633 068
- WO-A-93/08127
- BE-A- 461 600
- GB-A- 2 088 239
- GB-A- 2 250 221
- US-A- 2 652 925
- US-A- 2 939 830
- US-A- 5 161 512
- PATENT ABSTRACTS OF JAPAN vol. 13, no. 105 (C-575), 13 mars 1989 -& JP 63 277778 A (ANELVA CORP.), 15 novembre 1988, -& DATABASE WPI Section Ch, Week 8851 Derwent Publications Ltd., London, GB; Class M13, AN 88-366222 XP002048935 & JP 63 277 778 (NICHIDEN ANELVA K.K.) , 15 novembre 1988

## Description

La présente invention concerne la catalyse de réactions chimiques ou physico-chimiques par déplacement de champs magnétiques au sein des substances à traiter et en particulier un dispositif de génération de champ magnétique mobile dans le but d'engendrer des déformations stéréochimiques des molécules dans un milieu déterminé.

Il est connu que lors de la dernière guerre mondiale, des aimants permanents étaient utilisés sur les tubulures d'arrivée de carburant des moteurs d'avions afin de diminuer la production de fumées et par conséquent leur repérage dans le ciel.

Depuis, l'utilisation de champs magnétiques pour dynamiser la combustion des carburants a donné lieu à de nombreux brevets dont les caractéristiques générales sont celles de champs magnétiques statiques ou omnidirectionnels et alternatifs.

En particulier, l'utilisation de champs magnétiques fixes et éventuellement superposés à des champs alternatifs dans le but d'obtenir un champ magnétique perpendiculaire ou parallèle à la direction d'écoulement d'un fluide pour y introduire des réactions stéréochimiques, a été décrite dans les documents GB 2.250.221, WO 93/08127 ou WO 96/10692.

Ces résultats indiquent cependant clairement que lorsque les champs sont perpendiculaires à l'axe de la conduite de fluide, l'augmentation du rendement de la combustion est une fonction de la vitesse de passage du carburant à travers le champ magnétique et de l'intensité de ce champ magnétique.

Cette constatation évoque bien sûr la loi de Laplace en électromagnétisme et la théorie de P. Langevin concernant l'action des champs magnétiques sur tout type de matière, isolante ou conductrice.

La théorie de P. Langevin, expliquant les phénomènes généraux du diamagnétisme, s'appuyant sur la loi de Laplace: F = e*V^H, appliquée aux électrons périphériques des molécules ou des complexes moléculaires organisés, permet de considérer que si la vitesse relative V n'est pas seulement celle du déplacement d'un électron périphérique sur sa propre orbite mais également celle du déplacement relatif du champ magnétique par rapport au fluide, elle occasionne alors un déplacement orbital de l'électron et entraîne une déformation stéréochimique de la molécule ou du complexe moléculaire qui peut avoir une durée de vie non négligeable.

Ces déformations stéréochimiques des molécules sont connues comme étant le mécanisme d'action des catalyseurs physiques qui adsorbent les réactants, tels que les mousses de platine le Nickel raney finement divisé, etc... dont l'usage tend à disparaître au profit de catalyseurs chimiques dont le mécanisme d'action est d'ailleurs souvent comparable.

Pour préciser les idées il est utile de prendre l'exemple d'un carburant. C'est un octane ou du moins un alcane à chaîne plus ou moins longue. A partir de 4 carbones, soit le butane (c'est un gaz dans ce cas), la conformation stéréochimique de la molécule a plusieurs possibilités. Son état de plus basse énergie, c'est à dire son état normal, la met sous une forme pelotonnée offrant le minimum de sites réactifs. L'excitation des électrons périphériques de la molécule, par un champ magnétique se déplaçant rapidement par rapport au carburant, les fait passer à des états supérieurs d'énergie, c'est à dire sur une orbitale plus haute suivant la théorie de schrödinger, et conduit à une déformation stéréochimique de la molécule. Cette dernière passe dans un état plus élevé d'énergie sous la forme développée linéairement offrant ainsi le maximum de sites réactionnels; l'énergie d'activation de la réaction est par conséquent abaissée d'autant.

Il est également connu depuis longtemps que les champs magnétiques statiques ou omnidirectionnels et alternatifs superposés colinéairement, favorisent les germinations cristallines au sein des solutions salines qui les traversent.

Les mécanismes d'action supposés sont ceux de l'agitation des ions produite par les forces de Laplace qui engendrerait de nombreux chocs et favoriserait les germinations.

Ainsi le brevet BE 461.600 décrit un dispositif générant un champ magnétique tournant destiné à engendrer des courants de Foucault pour empêcher le dépôt des incrustations sur les parois des canalisations ou autres conduites dans lesquelles circule l'eau à traiter.

Conçu comme le stator d'un moteur électrique asynchrone, le champ magnétique tournant est produit à une intensité constante et tourne à la fréquence du courant polyphasé utilisé. Il est également à remarquer que les caractéristiques de l'eau incrustante pouvant varier dans de larges proportions, le dispositif doit pouvoir générer une large gamme de courants de Foucault afin de couvrir celle requise par les caractéristiques de l'eau à traiter. Cette variation est obtenue par l'augmentation de l'épaisseur des filets d'eau soumis au champ magnétique ou par la variation des caractéristiques du générateur de courants de Foucault le long du parcours. Ces variations possibles introduites sont donc propres aux caractéristiques initiales mécaniques du dispositif et non adaptables pour un cas particulier.

Il s'avère que l'action d'un champ magnétique sur une solution saline telle que l'eau contenant des sels de calcium, est comparable à l'action d'un champ magnétique sur un hydrocarbure. Il est en effet connu qu'un ion n'existe pas sous forme isolée dans son solvant mais est entouré d'un ensemble de molécules de solvant. La constitution de cet ensemble, ion plus molécules de solvant, est formée grâce à l'énergie de solvatation et cet ensemble se maintient stable, avec une énergie minimale, permettant au sel de rester dissous. Il est également connu que les aspérités internes des parois des conduites de fluides disposent de l'énergie suffisante pour adsorber les complexes de solvatation, modifier leurs conformations stéréochimiques et initialiser la cristallisation; Ce dernier phénomène est celui qui explique le développement du tartre dans les canalisations, surtout si ces dernières sont chauffées. L'action d'un champ magnétique en déplacement relatif par rapport à l'eau en plus de la simple force de Laplace sur la charge électrique principale qu'est l'ion, et qui par conséquent génère naturellement un courant de Foucault, développe des forces sur les électrons de périphérie de ce complexe de solvatation et comme pour toute molécule ou complexe moléculaire ou ionique, suivant les théories de P. Langevin, permet d'élever l'énergie de ces électrons. Le changement d'orbitale des électrons de périphérie modifie la configuration stéréochimique du complexe, et par la même l'énergie de solvatation, abaissant ainsi l'énergie de germination pour les cristaux et permettant leur génération spontanée et en grand nombre au sein même du fluide. Une fois créés, ces germes cristallins croissent au sein du fluide mais n'adhèrent plus aux parois.

En fait, dans les deux applications qui viennent d'être citées, les résultats obtenus n'ont jamais été entièrement concluants et à la hauteur de ce qu'on pouvait attendre de l'utilisation de champs magnétiques. Ceci s'explique par le fait qu'il est très difficile de connaître les énergies nécessaires pour obtenir la déformation souhaitée des molécules dans la mesure où elles dépendent des quantités d'énergie absorbées par les électrons pour passer d'une orbitale électronique à une autre et relèvent de la théorie quantique. Jusqu'à maintenant, on ne s'est jamais préoccupé de mettre cette dernière en pratique dans la génération des champs magnétiques destinés à introduire des déformations stéréochimiques.

C'est pourquoi le but principal de l'invention est de fournir un dispositif de génération de champ magnétique mobile utilisé dans un milieu fluide pour y induire des déformations stéréochimiques des molécules quels que soient les niveaux d'énergie nécessaires à mettre en jeu pour obtenir le résultat optimal.

La solution qui est à la base de cette invention consiste à soumettre les molécules ou complexes moléculaires ou ioniques à une large gamme d'énergie magnétique dans laquelle la molécule ou le complexe pourra absorber l'énergie qui lui convient exactement comme un corps coloré absorbe dans le spectre lumineux uniquement les radiations qui correspondent à des transitions permises.

Pour arriver à ce résultat, l'idée mère est que le produit vectoriel selon la loi de Laplace entre le champ magnétique H et la vitesse relative V du champ par rapport au fluide présente un gradient ayant la plus grande valeur possible, ceci ne pouvant être obtenu qu'en mettant en jeu un champ magnétique mobile d'amplitude'variable et de vitesse angulaire variable. On notera que la vitesse relative V est principalement la vitesse de déplacement du champ magnétique dans la mesure où celle-ci est beaucoup plus importante que la vitesse de circulation du fluide et que ce dernier n'est pas obligé de circuler.

L'objet de l'invention est donc un dispositif de génération de champ magnétique mobile dans au moins un plan de champ magnétique situé dans le milieu à traiter et pour lequel le produit vectoriel de l'intensité du champ magnétique par sa vitesse de déplacement engendre des déformations stéréochimiques des molécules du milieu. Dans chaque plan de champ magnétique se trouvent placés au moins deux moyens de génération d'un premier et d'un deuxième champ magnétique, les directions des champs magnétiques faisant entre elles un angle prédéfini θ et au moins un de ces champs magnétiques étant d'amplitude variable dans le temps de telle sorte que la résultante des deux champs magnétiques soit un champ magnétique mobile dans le plan de champ ayant une amplitude variable dans le temps et une direction mobile selon une vitesse angulaire variable de façon à obtenir un gradient du produit vectoriel le plus important possible.

Les buts, objets et caractéristiques de la présente invention ressortiront plus clairement à la lecture de la description qui suit faite en référence aux dessins dans lesquels:
la figure 1 représente une vue en coupe d'un dispositif de génération selon un premier mode de réalisation de l'invention appliqué à une canalisation dans laquelle circule le fluide à traiter,
la figure 2 représente une vue en coupe d'un dispositif du type de celui représenté sur la figure 1, dans lequel le champ magnétique d'un couple de bobine est refermé par une armature en U,
la figure 3 représente une vue en coupe d'un dispositif du type de celui représenté sur la figure 1, dans lequel le champ magnétique d'un couple de bobine est refermé par une armature en E,
les figures 4A, 4B, 4C représentent respectivement l'amplitude sinusoïdale du premier champ magnétique utilisé dans un exemple spécifique du dispositif selon le premier mode de réalisation de l'invention, l'amplitude sinusoïdale du deuxième champ magnétique, et la courbe décrite par l'extrémité vectorielle du champ magnétique résultant,
les figures 5A, 5B, 5C représentent respectivement l'amplitude sinusoïdale du premier champ magnétique utilisé dans un autre exemple spécifique du dispositif selon le premier mode de réalisation, l'amplitude sinusoïdale du deuxième champ magnétique et la courbe décrite par l'extrémité vectorielle du champ magnétique résultant,
les figures 6A, 6B, 6C représentent respectivement une vue en coupe d'un dispositif de génération selon un second mode de réalisation appliqué à une canalisation où circule le fluide à traiter et les deux positions extrêmes du vecteur représentant le champ magnétique résultant,
la figure 7 représente un troisième mode de réalisation du dispositif selon l'invention dans lequel le plan de champ n'est pas perpendiculaire au sens de déplacement du fluide à traiter,
la figure 8 représente un quatrième mode de réalisation dans lequel le dispositif selon l'invention se trouve inclus dans la canalisation où circule le fluide à traiter,
la figure 9 est une vue en coupe d'une variante du premier mode de réalisation de l'invention comprenant plusieurs plans de champ magnétique, et
la figure 10 est une vue en coupe d'un cas particulier du mode de réalisation illustré sur la figure 9.

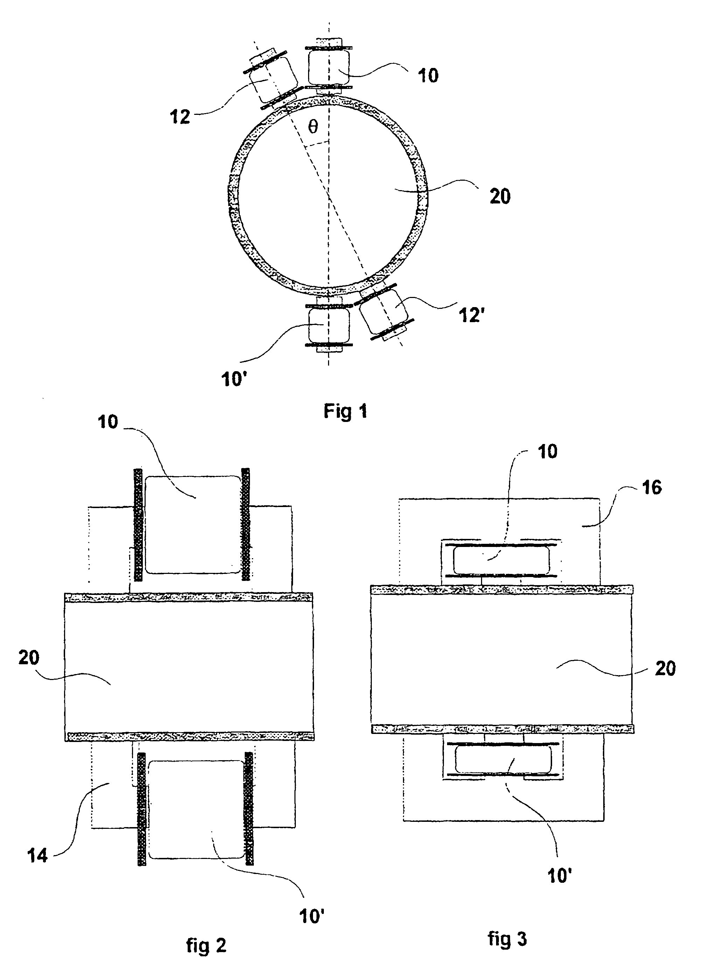

Comme l'illustre la figure 1, un premier mode de réalisation de l'invention consiste à disposer deux couples de bobines appairées 10, 10' et 12, 12',(à noter que chaque couple de bobines pourrait être remplacé par une seule bobine), et formant un angle de θ degrés, cet angle étant ajustable et pouvant varier depuis une valeur minimale donnée par les bobines en contact (cas de la figure) et jusqu'à la valeur maximale de 180° moins l'angle minimal imposé par les dimensions des bobines. Les bobines sont constituées de n spires de fils électrique, n pouvant varier de quelques tours pour les fréquences élevées ou les fortes intensités de courant, à plusieurs milliers de tours pour les faibles intensités ou les faibles fréquences, et possèdent normalement un noyau de substance ferromagnétique, éventuellement constitué en fer feuilleté pour les basses fréquences et plus généralement en ferrites douces acceptant des fréquences très élevées. La forme de ce noyau peut être simplement un barreau mais il est possible d'utiliser des formes permettant de refermer les champs tels que le noyau 14 ayant une forme de U de la figure 2 ou le noyau 16 de la figure 3 ayant une forme de E

Dans ce mode de réalisation, les couples de bobines sont disposées à la périphérie de la canalisation 20 où circule le fluide à traiter.

On doit noter que les champs magnétiques fournis par les bobines de la figure 1 se trouvent dans un seul plan de champ alors que les champs magnétiques générés par les bobines de la figure 2 se trouvent dans deux plans de champs parallèles grâce à la forme de U et que ceux de la figure 3 se trouvent dans trois plans de champs parallèles grâce à la forme de E.

Dans le dispositif illustré sur la figure 1, chaque couple de bobines est alimenté par un courant ayant une loi d'amplitude propre mais quelconque, de fréquence propre et sans rapport obligatoire avec l'autre. Le champ résultant est alors complètement variable en amplitude, pouvant éventuellement et périodiquement être la somme vectorielle des amplitudes maximales des champs produits séparément ce qui peut représenter des variations d'amplitude des champs assez considérables, variables en direction selon des vitesses angulaires également variables et pouvant prendre des valeurs importantes suivant les fréquences utilisées. Le spectre des énergies représentées par H^V en fonction du temps est donc très large et couvre amplement les bandes d'énergies requises pour faire passer les molécules d'un état stable de basse énergie à un état excité d'énergie plus élevée et de durée de vie acceptable.

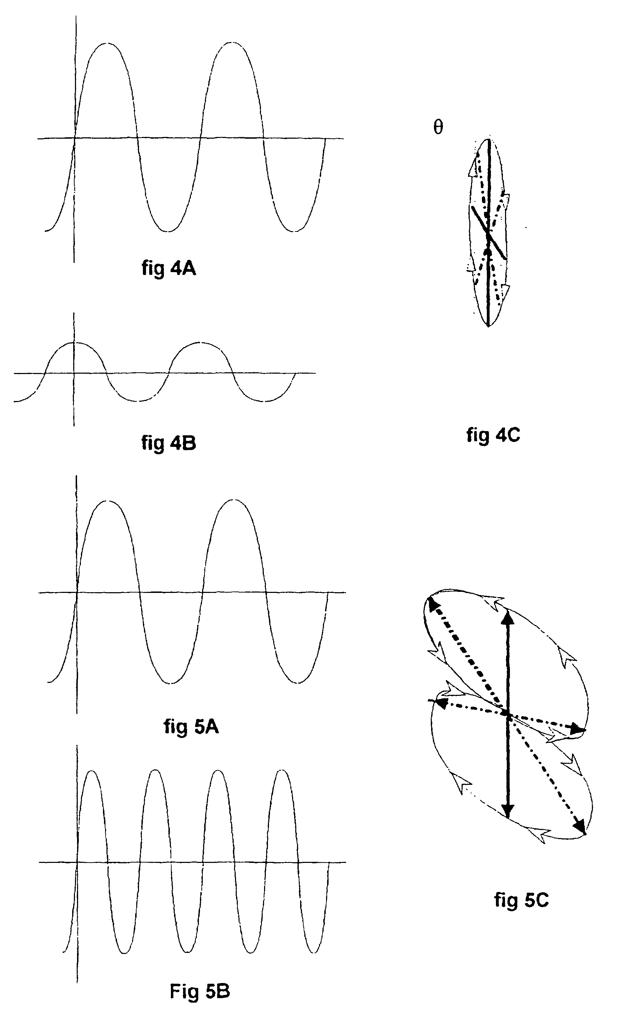

Un exemple du mode de réalisation utilisant le dispositif représenté schématiquement sur la figure 1, consiste à utiliser des couples de bobines générant des champs magnétiques dont l'amplitude est sinusoïdale en fonction du temps. Ainsi on peut alimenter les couples de bobines par des courants sinusoïdaux ayant des amplitudes différentes, de même fréquence, mais déphasé d'un angle quelconque. Les représentations graphiques des champs magnétiques générés par les bobines sont illustrées sur les figures 4A et 4B pour un déphasage de 90°. La figure 4C représente la courbe décrite par l'extrémité du vecteur magnétique résultant et celui de sa vitesse de balayage angulaire, la représentation étant faite pour des intervalles de temps d'un huitième de la période, elle illustre bien le gradient d'autant plus important que les amplitudes sont différentes.

On peut également alimenter les deux couples de bobines par des courants sinusoïdaux de même amplitude mais de fréquences différentes l'une par rapport à l'autre, le double par exemple. Les représentations graphiques des champs magnétiques générés par de telles bobines alimentées en fréquence double sont illustrées sur les figures 5A et 5B. La figure 5C représente la courbe décrite par l'extrémité du vecteur magnétique résultant et celui de sa vitesse de balayage angulaire, la représentation étant faite en prenant comme unité le huitième de la fréquence la plus basse. Elle illustre bien le gradient d'autant plus grand que les fréquences sont différentes.

Sur ces deux exemples précédents nous avons mis en évidence l'importance des différences d'amplitudes et de fréquences des champs se composants pour donner le champ mobile variable.

Pour ne pas surcharger nous n'illustrons pas les variations de champs résultants donnés par des déphasages autres que 90° ni les variations de champs résultants des différentes valeurs que peut prendre l'angle θ entre les deux directions des champs composants. L'homme de l'art sait poursuivre la démonstration.

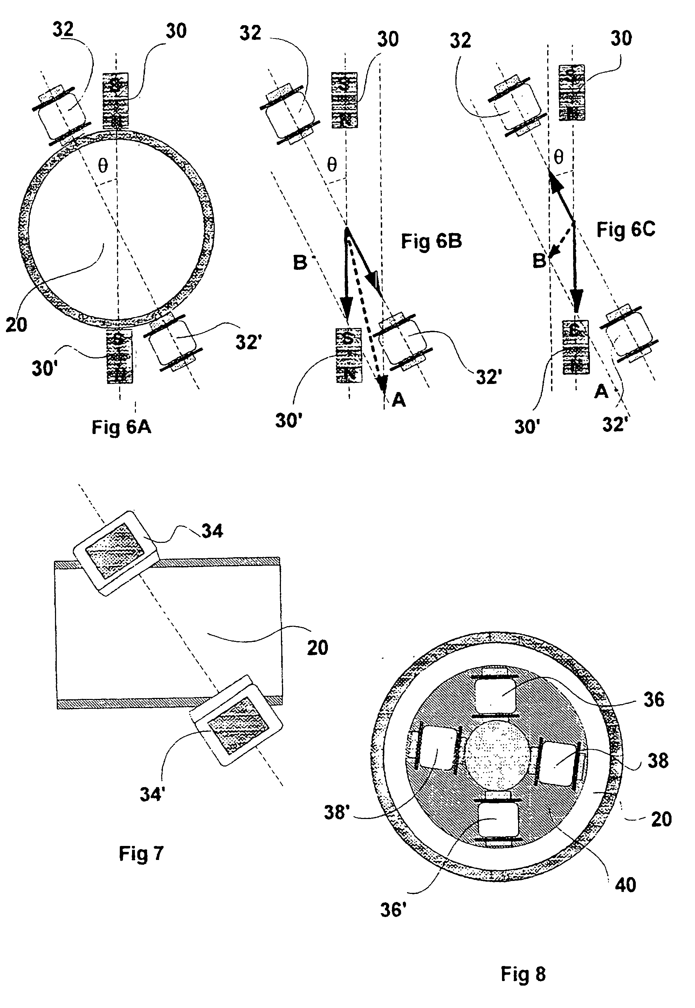

Un second mode de réalisation du dispositif selon l'invention est illustré par les figures 6A, 6B, 6C. Dans ces cas, le dispositif comprend un couple d'aimants permanents 30 et 30' (un seul aimant permanent pourrait être utilisé.) diamétralement opposés afin que leurs champs s'ajoutent (le pole Nord de l'un est en regard du pole Sud de l'autre) et un couple de bobines appairées 32 et 32', c'est à dire diamétralement opposées et bobinées de façon telle que leurs champs s'ajoutent, placées à θ degrés des aimants comme illustré sur la figure. Lorsque les bobines sont alimentées avec un courant ayant une loi d'intensité quelconque, (pouvant être bien sûr sinusoïdale mais aussi en dents de scie par exemple ou toute autre loi répétitive ou non), l'addition vectorielle du champ magnétique généré par les aimants permanents et du champ de direction fixe, mais d'amplitude variable généré par les bobines, donne un champ résultant variable en amplitude, direction, vitesse algébrique. Ce champ résultant peut être qualifié d'oscillant et présente toutes les caractéristiques de l'invention. La figure 6B représente la position du champ résultant quand le champ variable est maximum dans un sens et la figure 6C quand le champ est maximum en sens inverse. Dans notre recherche d'une large variation du spectre V^H il est particulièrement intéressant que le sens de déplacement du champ résultant change; C'est particulièrement le cas ici avec ces champs qualifiés d'oscillants.

Entre les deux cas extrêmes, représentés sur les figures 6B et 6C, le vecteur champ résultant s'est déplacé à une vitesse angulaire variable et a une amplitude également variable suivant la loi du courant alimentant les bobines. On peut noter que l'extrémité du vecteur représentant le champ magnétique résultant se trouve sur un segment dont les deux extrémités A et B sont atteintes pour les deux maxima du champ variable. Il est intéressant de remarquer que si les noyaux des bobines sont en forme de U ou de E, l'aimant permanent ayant une longueur égale à l'espacement des pôles du U ou du E, ces pôles émettant des champs de directions opposées, les mouvements des champs composés avec le champ statique de l'aimant permanent sont naturellement de sens opposé, ce qui augmente d'autant les valeurs du spectre des H^V recherchées.

Le dispositif est de structure simple et ne nécessite qu'un générateur de courant variable en fréquence afin de placer le spectre des valeurs V^H dans le domaine voulu pour la réaction considérée.

Le plan de champ n'est pas forcément perpendiculaire à l'axe d'écoulement du fluide dans la canalisation 20 mais peut être incliné d'un certain angle comme le sont les bobines 34 et 34' du troisième mode de réalisation du dispositif illustré sur la figure 7. Cette inclinaison peut prendre n'importe quelle valeur car dans le produit V^H, la vitesse considérée n'est pas celle du déplacement du fluide mais uniquement celle du déplacement relatif du champ, l'angle entre V et H est donc toujours de 90°, cependant si l'angle d'inclinaison devient important, il tend à éloigner les bobines et diminue par conséquent l'intensité du champ produit. Il est donc raisonnable de ne pas dépasser 45° pour cet angle d'inclinaison par rapport à l'axe de la conduite de fluide.

Dans un quatrième mode de réalisation du dispositif selon l'invention, les couples de bobines 36, 36' et 38, 38' ou pièces polaires sont à l'intérieur de la canalisation 20. Dans ce cas les pièces polaires sont enrobées dans une résine isolante électriquement et non ferromagnétique 40. C'est également presque l'équivalent d'un moteur asynchrone à stator central, toujours avec la même exception que l'angle formé par l'axe des bobines, couples de bobines ou aimants permanents, n'est pas imposé mais doit être calculé afin d'obtenir le résultat désiré; Inclus dans une résine isolante il ne peut malheureusement plus être réglé ultérieurement.

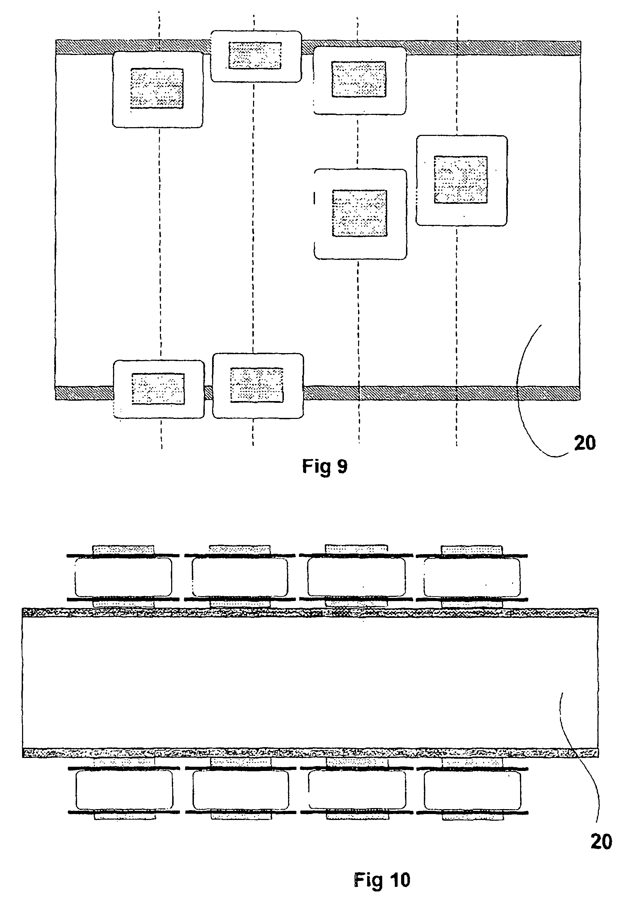

Jusqu'à maintenant, toutes les pièces polaires (aimants permanents ou bobines) ont été représentées dans un même plan de champ. Cependant les pièces polaires ayant une largeur naturelle, non limitée théoriquement mais seulement par des conditions pratiques, donc comprise entre quelques millimètres et pouvant aller jusqu'à plusieurs centimètres pour les gros dispositifs, on peut parler d'une tranche d'épaisseur donnée dans laquelle se manifestent les actions des champs mobiles. Il est donc tout à fait concevable, comme le montre la figure 9 et la figure 10 qui est une vue en coupe d'un cas particulier de la figure 9 où toutes les bobines sont alignées le long d'une génératrice de la canalisation, d'accoler un nombre quelconque de tranches de champs mobiles, ayant éventuellement les mêmes caractéristiques de spectre de valeurs H^V dans le seul but d'augmenter le domaine d'action et la puissance totale du dispositif, mais pouvant également être totalement différentes.

Dans tous les modes de réalisation du dispositif selon l'invention, qui viennent d'être décrits, l'emploi de champs magnétiques variables en amplitude et en vitesse de déplacement est une méthode simple et de grande souplesse car l'intensité du champ magnétique, son domaine de variation, sa vitesse de déplacement, sont des grandeurs qui sont entièrement contrôlables et peuvent être facilement adaptées au type de réaction chimique ou physico-chimique considérée et agissent au coeur même des substances, quelle que soit leur nature, gaz, liquide plus ou moins pâteux ou solides pulvérulents, et non pas seulement sur les surfaces d'adsorption. L'efficacité en est donc particulièrement accrue et se trouve totalement indépendante de la vitesse de déplacement du fluide, ce dernier pouvant être statique.

En adaptant les paramètres (intensité, fréquence, amplitude, vitesse angulaire) il est possible de couvrir des spectres de valeurs V^H plus ou moins importants et adaptés au type de réaction chimique ou physico-chimique considérée.

Le premier mode de réalisation du dispositif selon l'invention (illustré sur la figure 1) trouve ses principales applications dans le traitement magnétique des eaux incrustantes. L'effet anti tartre est totalement indépendant de la vitesse de passage de l'eau dans le champ magnétique puisque c'est ce dernier qui varie à la fois en amplitude, vitesse de déplacement et sens de déplacement. Le système est réglable même une fois en place et non pas seulement dans sa fabrication, comme c'est le cas dans le document BE 461.600, et couvre une gamme de valeurs H^V très étendue.

Les bobines ou couples de bobines sont placés dans un même plan autour de la conduite principale d'arrivée d'eau, ce qui ne nécessite aucun travail de plomberie si le tuyau est en substance non ferromagnétique (cuivre ou PVC normalement). L'angle formé par les couples de bobines peut être réglé, ce qui facilite l'installation, les conduites d'eau étant généralement près des murs. Les bobines ou couples de bobines sont alimentés par des générateurs de courant indépendants, chacun réglable séparément en fréquence afin d'ajuster le spectre des valeurs V^H en tenant compte de la latitude d'ajustement de l'angle formé par les couples de bobines. On peut ainsi facilement adapter le dispositif aux caractéristiques de la canalisation d'eau et à celle de l'eau qui ne contient d'ailleurs pas que du carbonate de calcium dissous. L'étendue possible des spectres de valeurs H^V permet d'agir sur d'autres complexes de solvatation que ces derniers.

Le second mode de réalisation illustré sur la figure 6A trouve ses principales applications dans les moteurs thermiques à injection ou à carburateur par la dynamisation des carburants. Le dispositif augmente de façon significative le rendement énergétique du carburant et diminue les pollutions. Pour les moteurs thermiques à injection, un ou plusieurs dispositifs doivent être placés sur les tubes d'amenée de carburant aux injecteurs et assez proche d'eux. Un simple générateur de courant monophasé, le signal étant de forme quelconque, réglable en fréquence entre quelques hertz et quelques milliers de hertz, alimenté à partir de la batterie lorsque le contact est mis, est suffisant.

La taille des aimants et des bobines est adaptée à la section des conduites d'amenée de carburant.

Pour les moteurs à carburateur, les dispositifs sont fixés sur les pipes d'admission du mélange. Ces pipes étant plus grosses en diamètre, les dimensions du dispositif sont adaptées en conséquence.

De façon générale,.le dispositif selon l'invention s'applique à tout type de fluide pour lequel un comportement particulier peut être amélioré. L'action du dispositif étant totalement indépendante des mouvements propres des fluides, ces derniers ne sont pas tenus de s'écouler dans une canalisation et peuvent être statiques dans un récipient. A titre d'exemple non limitatif, la solubilisation d'huiles essentielles dans l'eau est améliorée par l'action d'un dispositif selon l'invention.

## Revendications

1. Dispositif de génération d'un champ magnétique mobile dans au moins un plan de champ magnétique situé dans un milieu déterminé pour engendrer des déformations stéréochimiques des molécules du milieu,
**caractérisé en ce que**
- dans chaque plan de champ magnétique se trouve placés au moins un premier moyen de génération d'un premier champ magnétique et un deuxième moyen de génération d'un deuxième champ magnétique,
- les directions desdits premier et deuxième champs magnétiques faisant entre elles un angle prédéfini θ et
- au moins l'un des premier et deuxième champs magnétiques étant d'amplitude variable dans le temps de telle sorte que la résultante des premier et deuxième champs magnétiques soit un champ magnétique mobile dans le plan de champ avec une amplitude variable dans le temps et une direction mobile selon une vitesse angulaire variable de façon à obtenir un gradient du produit vectoriel de l'intensité du champ magnétique et de sa propre vitesse de déplacement le plus important possible.

2. Dispositif selon la revendication 1,
**caractérisé en ce que**
- le premier moyen de génération de champ magnétique est un aimant permanent ou un couple d'aimants permanents (30, 30') et
- le deuxième moyen de génération de champ magnétique est une bobine ou un couple de bobines (32, 32') alimentée(s) par un courant d'intensité variable dans le temps de telle sorte que le champ magnétique résultant soit un champ magnétique mobile oscillant entre deux positions correspondant aux deux valeurs maximales, en valeur absolue, de l'intensité circulant dans la (les) bobine(s).

3. Dispositif selon la revendication 1,
dans lequel
- le premier moyen de génération de champ magnétique est une bobine ou un couple de bobines (10, 10') et
- le deuxième moyen de génération de champ magnétique est une bobine ou un couple de bobines (12, 12'),
- chaque bobine ou couple de bobines étant alimentée(s) par des courants ayant des amplitudes et fréquences variables et sans rapport entre elles.

4. Dispositif selon la revendication 3,
**caractérisé en ce que**
le courant alimentant la ou les bobines du premier moyen de génération de champ magnétique (10, 10') et le courant alimentant la ou les bobines du deuxième moyen de génération de champ magnétique (12, 12'), sont des courants sinusoïdaux de même fréquence, mais d'amplitudes différentes et un déphasage de 90°.

5. Dispositif selon la revendication 3,
**caractérisé en ce que**
le courant alimentant la ou les bobines dudit premier moyen de génération de champ magnétique (10, 10') et le courant alimentant la bobine ou les bobines du deuxième moyen de génération de champ magnétique sont des courants sinusoïdaux de même amplitude mais de fréquence différente.

6. Dispositif selon la revendication 1,
**caractérisé en ce que**
le milieu déterminé est un fluide s'écoulant dans une canalisation (20), les premier et deuxième moyens de génération de champ magnétique étant situés à l'extérieur de la canalisation.

7. Dispositif selon la revendication 1,
**caractérisé en ce que**
le milieu déterminé est un fluide s'écoulant dans une canalisation (20), les premier et deuxième moyens de génération de champ magnétique étant situés à l'intérieur de ladite canalisation (figure 8).

8. Dispositif selon la revendication 6 ou 7,
dans lequel
les plans de champs magnétiques font un angle compris entre 45 et 90° avec la direction d'écoulement du fluide à traiter.

9. Dispositif selon l'une des revendications 1 à 8, comprenant plusieurs plans dans des champs magnétiques parallèles.

10. Dispositif selon la revendication 1,
dans lequel
le moyen de génération de champ magnétique d'amplitude variable est composé d'un couple de bobines (10, 10') comportant un noyau de substance ferromagnétique pour refermer les champs magnétiques générés par les bobines, le noyau ayant la forme de U (14) et le champ magnétique généré se manifeste dans deux plans parallèles ou en forme de E (16) et le champ magnétique généré se manifeste dans trois plans parallèles.

11. Dispositif selon la revendication 1,
**caractérisé en ce que**
le milieu déterminé est une eau calcaire dans des canalisations ou des chaudières.

12. Dispositif selon la revendication 1,
**caractérisé en ce que**
le milieu déterminé est un carburant pour moteur thermique.

## Patentansprüche

1. Vorrichtung zur Erzeugung eines beweglichen Magnetfeldes in zumindest einer Magnetfeldebene in einem zweckbestimmten Medium zur Erzeugung stereochemischer Verformungen der Moleküle des Mediums, **dadurch gekennzeichnet, daß**
- sich in jeder Magnetfeldebene zumindest ein erstes Mittel zur Erzeugung eines ersten Magnetfeldes und ein zweites Mittel zur Erzeugung eines zweiten Magnetfeldes befindet,
- die Richtungen des ersten und des zweiten Magnetfeldes zwischen sich einen vorbestimmen Winkel θ bilden und
- von dem ersten und dem zweiten Magnetfeld zumindest das eine eine veränderliche Amplitude in der Zeit hat, derart, daß die Resultierende des ersten und des zweiten Magnetfeldes ein bewegliches Magnetfeld in der Feldebene mit einer veränderlichen Amplitude in der Zeit und einer beweglichen Richtung gemäß einer veränderlichen Winkelgeschwindigkeit ist, um einen größtmöglichen Gradienten des Vektorprodukts der Magnetfeldstärke und der Verlagerungseigengeschwindigkeit zu erhalten.

2. Vorrichtung nach Anspruch 1, **dadurch gekennzeichnet, daß**
- das erste Mittel der Magnetfelderzeugung ein Dauermagnet oder ein Paar von Dauermagneten (30, 30') ist und
- das zweite Mittel der Magnetfelderzeugung eine Spule oder ein Paar von Spulen (32, 32') ist, gespeist von einem Strom veränderlicher Stärke in der Zeit, derart, daß das resultierende Magnetfeld ein bewegliches Magnetfeld ist, das zwischen zwei Positionen entsprechend, im Absolutwert, den beiden Maximalwerten der in der Spule/den Spulen zirkulierenden Stärke oszilliert.

3. Vorrichtung nach Anspruch 1, bei der
- das erste Mittel der Magnetfelderzeugung eine Spule oder ein Paar von Spulen (10, 10) und
- das zweite Mittel der Magnetfelderzeugung eine Spule oder ein Paar von Spulen (12, 12') ist,
- wobei jede Spule oder jedes Spulenpaar von Strömen mit veränderlichen Amplituden und Frequenzen und ohne Bezug untereinander gespeist ist.

4. Vorrichtung nach Anspruch 3, **dadurch gekennzeichnet, daß** der die Spule oder die Spulen des ersten Mittels der Magnetfelderzeugung (10, 10') speisende Strom und der die Spule oder Spulen des zweiten Mittels der Magnetfelderzeugung (12, 12') speisende Strom Sinusströme mit der gleichen Frequenz jedoch unterschiedlichen Amplituden und einer Phasenverschiebung von 90°C sind.

5. Vorrichtung nach Anspruch 3, **dadurch gekennzeichnet, daß** der die Spule oder Spulen des ersten Mittels der Magnetfelderzeugung (10, 10') speisende Strom und der die Spule oder Spulen des zweiten Mittels der Magnetfelderzeugung speisende Strom Sinusströme mit der gleichen Amplitude, jedoch verschiedener Frequenz sind.

6. Vorrichtung nach Anspruch 1, **dadurch gekennzeichnet, daß** das zweckbestimmte Medium ein in einer Leitung (20) fließendes Fluid ist und das erste und das zweite Mittel der Magnetfelderzeugung außerhalb der Leitung gelegen sind.

7. Vorrichtung nach Anspruch 1, **dadurch gekennzeichnet, daß** das zweckbestimmte Medium ein in einer Leitung (20) fließendes Fluid ist und das erste und das zweite Mittel der Magnetfelderzeugung im Inneren der Leitung gelegen sind (Fig. 8).

8. Vorrichtung nach Anspruch 6 oder 7, bei der die Magnetfeldebenen einen Winkel von 45 bis 90° mit der Fließrichtung des zu behandelnden Fluids bilden.

9. Vorrichtung nach einem der Ansprüche 1 bis 8, mit mehreren parallelen Magnetfeldebenen.

10. Vorrichtung nach Anspruch 1, bei der das Mittel der Magnetfelderzeugung veränderlicher Amplitude von einem Paar von Spulen (10, 10') mit einem Kern aus ferromagnetischem Material zum Schließen der von den Spulen erzeugten Magnetfelder gebildet ist, wobei der Kern U-Form (14) besitzt und das erzeugte Magnetfeld sich in zwei parallelen Ebenen darbietet oder E-Form (16) aufweist und das erzeugte Magnetfeld sich in drei parallelen Ebenen darbietet.

11. Vorrichtung nach Anspruch 1, **dadurch gekennzeichnet, daß** das zweckbestimmte Medium ein kalkhaltiges Wasser in Leitungen oder Heizkesseln ist.

12. Vorrichtung nach Anspruch 1, **dadurch gekennzeichnet, daß** das zweckbestimmte Medium ein Kraftstoff für eine Wärmekraftmaschine ist.

## Claims

1. Device for generating a movable magnetic field in at least one magnetic field plane situated in a given medium, in order to generate stereochemical deformations of the molecules of the medium,
**characterised in that**
- there are located in each magnetic field plane at least one first means for generating a first magnetic field and a second means for generating a second magnetic field,
- the directions of said first and second magnetic fields forming a predefined angle θ between one another, and
- at least one of the first and second magnetic fields being of variable amplitude with time, so that the resultant of the first and second magnetic fields is a movable magnetic field in the field plane having an amplitude that is variable with time and a movable direction according to a variable angular velocity, so as to obtain the greatest possible gradient of the vectorial product of the intensity of the magnetic field and its own displacement rate.

2. Device according to claim 1,
**characterised in that**
- the first means for generating a magnetic field is a permanent magnet or a pair of permanent magnets (30, 30'), and
- the second means for generating a magnetic field is a coil or a pair of coils (32, 32') which is/are supplied by a current of variable intensity with time, so that the resulting magnetic field is a movable magnetic field oscillating between two positions corresponding to two maximum values, in terms of absolute value, of the intensity circulating in the coil(s).

3. Device according to claim 1,
in which
- the first means for generating a magnetic field is a coil or a pair of coils (10, 10'), and
- the second means for generating a magnetic field is a coil or a pair of coils (12, 12'),
- each coil or pair of coils being supplied by currents which have variable amplitudes and frequencies and are not related to one another.

4. Device according to claim 3,
**characterised in that**
the current supplying the coil(s) of the first means for generating a magnetic field (10, 10') and the current supplying the coil(s) of the second means for generating a magnetic field (12, 12') are sinusoidal currents which have the same frequency but different amplitudes and which have a phase displacement of 90°.

5. Device according to claim 3,
**characterised in that**
the current supplying the coil(s) of said first means for generating a magnetic field (10, 10') and the current supplying the coil(s) of the second means for generating a magnetic field are sinusoidal currents which have the same amplitude but different frequencies.

6. Device according to claim 1,
**characterised in that**
the medium that is determined is a fluid flowing in a pipe (20), the first and second means for generating a magnetic field being located outside the pipe.

7. Device according to claim 1,
**characterised in that**
the medium that is determined is a fluid flowing in a pipe (20), the first and second means for generating a magnetic field being located inside said pipe (Figure 8).

8. Device according to claim 6 or 7,
in which
the magnetic field planes form an angle of from 45 to 90° with the direction of flow of the fluid to be treated.

9. Device according to any one of claims 1 to 8, comprising a plurality of planes in parallel magnetic fields.

10. Device according to claim 1,
in which
the means for generating a magnetic field of variable amplitude is composed of a pair of coils (10, 10') comprising a core of a ferromagnetic substance for closing the magnetic fields generated by the coils, the core being U-shaped (14) and the magnetic field generated manifests itself in two parallel planes, or E-shaped (16) and the magnetic field generated manifests itself in three parallel planes.

11. Device according to claim 1,
**characterised in that**
the medium that is determined is a calcareous water in pipes or boilers.

12. Device according to claim 1,
**characterised in that**
the medium that is determined is a thermal engine fuel.
